# EUROPÄISCHE PATENTSCHRIFT

(11) **EP 1 454 072 B1**
(45) Veröffentlichungstag und Bekanntmachung des Hinweises auf die Patenterteilung: **10.08.2005**
(21) Anmeldenummer: 02792637.7
(22) Anmeldetag: 06.12.2002
(51) Int. Cl.: F16C 11/06

(54) **KUGELGELENK FÜR EIN KRAFTFAHRZEUG**
BALL AND SOCKET JOINT FOR A MOTOR VEHICLE
JOINT A ROTULE POUR UN VEHICULE AUTOMOBILE

(30) Priorität: 14.12.2001 DE 10161671
(43) Veröffentlichungstag der Anmeldung: 08.09.2004
(73) Patentinhaber: ZF Lemförder Metallwaren AG, 49448 Lemförde (DE)
(72) Erfinder: ERSOY, Metin, 65396 Walluf (DE); SPRATTE, Joachim, 49090 Osnabrück (DE); MÜLLER, Armin, 32369 Rahden (DE)
(86) Internationale Anmeldenummer: PCT/DE2002/004482
(87) Internationale Veröffentlichungsnummer: WO 2003/052284

(56) Entgegenhaltungen:
- EP-A- 0 617 260
- WO-A-01/57639
- DE-C- 10 110 738
- US-A- 4 500 867
- PATENT ABSTRACTS OF JAPAN vol. 2000, no. 01, 31. Januar 2000 (2000-01-31) -& JP 11 271014 A (KAWASAKI HEAVY IND LTD), 5. Oktober 1999 (1999-10-05)

## Beschreibung

Die Erfindung betrifft ein Kugelgelenk für ein Kraftfahrzeug, insbesondere für das Fahrwerk des Kraftfahrzeugs, mit einem mit einer Gelenköffnung versehenen Kugelgelenkgehäuse und einem eine Gelenkkugel und einen Zapfen aufweisenden Kugelzapfen, welcher mit seiner Gelenkkugel drehbar und schwenkbar in dem Kugelgelenkgehäuse gelagert ist und mit seinem Zapfen durch die Gelenköffnung hindurch aus dem Kugelgelenkgehäuse herausragt, an welchem ein eine in diesem vorgesehene Montageöffnung zumindest teilweise verschließendes, separates Verschlusselement befestigt ist.

Derartige Kugelgelenke sind aus dem Stand der Technik bekannt und bestimmen als wichtige Bestandteile von Radaufhängungen, Fahrzeugachsen und der Anbindung dieser Achsen an den Fahrzeugaufbau die Funktion des Fahrwerkes des Kraftfahrzeuges mit. In der Regel wird jedes Rad eines Kraftfahrzeugs von einem Radträger getragen, der über Lenker mit dem Fahrzeugaufbau verbunden ist. Die Lenker weisen dabei häufig an ihren den Radträgern zugewandten Enden Kugelgelenke auf, welche die kinematischen Anlenkpunkte des Lenkers an dem Radträger bilden. Ferner sind Kugelgelenke im Bereich der Fahrzeugachsen auch an Spurstangen, Koppelstangen, Pendelstützen usw. vorhanden.

Seit längerer Zeit besteht die Anforderung, das Verhalten des Kraftfahrzeugs auf die konkreten Fahrzustände abzustimmen. Zum Beispiel kann das Wankverhalten des Kraftfahrzeugs durch einen zweigeteilten Stabilisator beeinflusst werden, dessen beide Teile über einen Hydraulikmotor gegeneinander verschwenkt werden können. Ferner ist es möglich, die Scheinwerfer in Abhängigkeit vom Beladungszustand zu verstellen. Um ein derartiges aktives Eingreifen in die Funktion des Fahrwerks oder anderer Bauelemente des Kraftfahrzeugs in Abhängigkeit vom aktuellen Zustand des Fahrwerks vorzunehmen, sind neben aktiven oder passiven Stellvorrichtungen auch elektronische Bauelemente wie Mess- und Auswerteeinrichtungen erforderlich, die zum Beispiel den aktuellen Fahrzustand oder den aktuellen Beladungszustand erfassen können. Das Anordnen derartiger Mess- und Auswerteeinrichtungen erfolgt dabei zusätzlich zu der Montage der das Fahrwerk bildenden mechanischen Bauelemente beim Automobilhersteller.

Aufgabe der Erfindung ist es, den Montageaufwand für im Fahrwerk eines Kraftfahrzeugs angeordnete elektronische Bauelemente beim Automobilhersteller zu reduzieren.

Die Lösung dieser Aufgabe erfolgt durch ein Kugelgelenk für ein Kraftfahrzeug, insbesondere für das Fahrwerk des Kraftfahrzeugs, das ein mit einer Gelenköffnung versehenes Kugelgelenkgehäuse und einen Kugelzapfen aufweist, der einen Zapfen sowie eine Gelenkkugel umfasst. Der Kugelzapfen ist mit seiner Gelenkkugel drehbar und schwenkbar in dem Kugelgelenkgehäuse gelagert und ragt mit seinem Zapfen durch die Gelenköffnung hindurch aus dem Kugelgelenkgehäuse heraus. In dem Kugelgelenkgehäuse ist ferner eine Montageöffnung vorgesehen, die zumindest teilweise von einem an dem Kugelgelenkgehäuse befestigten, separaten Verschlusselement verschlossen ist, an welchem wenigstens ein elektronisches Bauelement angeordnet ist.

Durch das erfindungsgemäße Kugelgelenk ist es möglich, die separate Montage des elektronischen Bauelements bei der Fertigung des Kraftfahrzeugs zu vermeiden, da das elektronische Bauelement bereits in dem Kugelgelenk integriert ist. Dies führt zu einer Ersparnis des Montageaufwands und somit zu einer Reduzierung der Kosten für den Fertigungsprozess bei dem Automobilhersteller.

Das Verschlusselement dient dazu, eine Öffnung des Kugelgelenkgehäuses zumindest teilweise zu verschließen. Dafür kann das Verschlusselement zum Beispiel als Ring ausgebildet sein, dessen innere Öffnung die Gelenköffnung des Kugelgelenkes bildet. In diesem Fall ist die Montageöffnung zapfenseitig an dem Kugelgelenkgehäuse vorgesehen, so dass bei der Montage des Kugelgelenks der Kugelzapfen mit seiner Kugel durch diese Montageöffnung in das Gehäuse eingesetzt wird. Das der Montageöffnung gegenüberliegende Ende des Kugelgelenkgehäuses ist bei einer derartigen Ausführungsform in der Regel vollständig verschlossen.
Bevorzugt weist jedoch das Kugelgelenkgehäuse an der der Gelenköffnung gegenüberliegenden Seite eine von dem Verschlusselement verschlossene Montageöffnung auf. In diesem Fall ist es möglich, bei der Montage des Kugelgelenks den Kugelzapfen zuerst mit seinem Zapfen in das Gehäuse einzuführen. Ferner wird das Verschlusselement nicht von dem Kugelzapfen durchsetzt, so dass eine größere Fläche für das Anordnen des wenigstens einen elektronischen Bauelementes an dem Verschlusselement zur Verfügung steht.

Um das Eindringen von Schmutz oder Feuchtigkeit in das Innere des Kugelgelenks zu vermeiden, ist es von Vorteil, wenn die Montageöffnung vollständig von dem Verschlusselement verschlossen wird.

Das elektronische Bauelement kann an der der Gelenkkugel abgewandten Seite (Außenseite) des Verschlusselements angeordnet sein. Wird das elektronische Bauelement an der der Gelenkkugel zugewandten Seite (Innenseite) des Verschlusselementes vorgesehen, ist es einfacher möglich, das elektronische Bauelement vor umweltbedingten Verunreinigungen, Beschädigungen oder beispielsweise thermischen Belastungen zu schützen.

Das elektronische Bauelement kann freistehend an dem Verschlusselement angeordnet sein. Bevorzugt wird jedoch eine Ausführung, nach der an dem Verschlusselement ein Schutzelement vorgesehen ist, von welchem das Verschlusselement zumindest teilweise und das elektronische Bauelement vorteilhaft vollständig abgedeckt ist. Für den Fall, dass das elektronische Bauelement an der Innenseite des Verschlusselements angeordnet wird, kann das Schutzelement beispielsweise zur Abweisung von Schmierstoff dienen, der regelmäßig in einem Kugelgelenk für ein Kraftfahrzeug vorhanden ist.
Bei Anbringung des elektronischen Bauelementes an der Außenseite des Verschlusselements wäre die vorrangige Aufgabe des Schutzelementes die Abweisung von umweltbedingten Verunreinigungen.

Das Schutzelement kann eine Abdeckung aus Metall, Keramik oder Kunststoff sein, die als separates Bauteil an dem Kugelgelenk zu montieren ist. Bevorzugt ist das Schutzelement aber aus elektrisch isolierendem Werkstoff, wie beispielsweise Kunststoff hergestellt, wobei Kunststoff insbesondere zu einer Gewichtseinsparung führt.

Ein aus Kunststoff hergestelltes Schutzelement kann auf das Verschlusselement aufgeklemmt oder aufgeklebt sein.
Nach einer weiteren Ausgestaltung der Erfindung handelt es sich bei dem Schutzelementwerkstoff um einen für ein Spritzverfahren geeigneten Kunststoff, so dass das Schutzelement unmittelbar auf das elektronische Bauelement aufgespritzt werden kann. Dadurch entfällt die Notwendigkeit der Montage des Schutzelementes, wobei ferner eine sehr gute Abschirmung des elektronischen Bauelements, insbesondere gegenüber Feuchtigkeit realisiert werden kann.

Das Verschlusselement kann als Scheibe oder als Ring aus Metallblech gefertigt sein. Bevorzugt ist das Verschlusselement aber selbst als elektronische Leiterplatte ausgebildet, auf welcher das elektronische Bauelement montiert ist. Somit kann das elektronische Bauelement in üblicher Art und Weise auf das Verschlusselement aufgelötet werden, um zum Beispiel eine Kontaktierung des elektronischen Bauelements über an der Leiterplatte ausgebildete Leiterbahnen zu realisieren.

Das als elektronische Leiterplatte ausgebildete Verschlusselement kann zum Beispiel aus Hartpapier oder aus Keramik hergestellt sein.
Ferner ist es im Sinne der Erfindung möglich, die Außenseite der elektronischen Leiterplatte durch eine zusätzliche Scheibe oder einen zusätzlichen Ring aus Metallblech zu verstärken. Bevorzugt ist das als elektronische Leiterplatte ausgebildete Verschlusselement aber aus glasfaserverstärktem Kunststoff hergestellt, der die an einen Verschlussdeckel eines Kugelgelenks im Kraftfahrzeug gestellten Anforderungen an die mechanische Belastbarkeit erfüllt.

Die elektronische Leiterplatte kann mit nur oberflächlich angeordneten Leiterbahnen versehen sein. Es ist aber auch möglich, im Volumen der elektronischen Leiterplatte Leiterbahnen vorzusehen (Multilayer).

Das Gehäuse kann gegenüber der elektronischen Leiterplatte elektrisch isoliert sein. Mit einer direkten Verbindung von elektronischer Leiterplatte und Gehäuse ist es allerdings möglich, das Gehäuse ohne zusätzliche Kabelverbindungen als elektromagnetische Abschirmung zu verwenden. Auch kann das Gehäuse selbst als Kühlkörper für das elektronische Bauelement ausgelegt sein.

Um den Fahr- oder den Beladungszustand eines Kraftfahrzeugs zu erfassen, kann das elektronische Bauelement ferner mit einem in oder an dem Kugelgelenkgehäuse angeordneten Sensor zum Erfassen einer den Zustand des Kugelgelenks charakterisierenden physikalischen Größe verbunden sein, wobei unter Zustand des Kugelgelenks zum Beispiel die aktuelle Auslenkung und/oder Verdrehung des Kugelzapfens gegenüber dem Kugelgelenkgehäuse zu verstehen ist. Ferner können im Kugelgelenk auftretende Kräfte über Kraftsensoren erfasst werden. Somit ist es beispielsweise möglich, über den erfassten Zustand des Kugelgelenkes auf den aktuellen Abstand des Rades vom Fahrzeugaufbau zu schließen. Durch derartige Diagnosen können auch Schlussfolgerungen auf den Zustand des Gesamtfahrzeuges gezogen werden.

Ein Sensor kann als separater Sensor in dem Kugelgelenk angeordnet sein, bevorzugt ist aus Gründen der Platzeinsparung der Sensor jedoch mit dem elektronischen Bauelement integriert ausgebildet.

An dem Verschlusselement können ferner mehrere, eine elektronische Baugruppe bildende elektronische Bauelemente angeordnet sein. Bevorzugt ist aber das elektronische Bauelement als ein anwendungsspezifischer integrierter Schaltkreis (ASIC) ausgebildet, so dass mit einem einzigen elektronischen Bauelement eine Vielzahl unterschiedlicher elektrischer Schaltkreise realisierbar ist. Dies führt zu einer großen Platzersparnis und einer hohen Variantenvielfalt des erfindungsgemäßen Kugelgelenks.

Damit das elektronische Bauelement Signale nach außen abgeben kann und eine Energieversorgung des elektronischen Bauelements gewährleistet ist, kann nach einer ersten Variante an dem Verschlusselement ein elektrisch mit dem elektronischen Bauelement verbundener Stecker zum Anschließen von externen Geräten vorhanden sein.

Nach einer zweiten Variante ist es aber auch möglich, dass in dem Kugelgelenk eine mit dem Bauelement elektrisch gekoppelte Vorrichtung zum Aussenden von elektromagnetischen Wellen angeordnet ist, welche einen Informationsaustausch zwischen dem Bauelement und den externen Geräten ohne eine Kabelverbindung ermöglicht.

Das elektronische Bauelement kann über eine Kabelverbindung mit der Stromversorgung des Kraftfahrzeugs verbunden sein. Ferner ist es möglich, eine Batterie in dem Kugelgelenk zum Versorgen des elektronischen Bauelements mit elektrischer Energie anzuordnen. Bevorzugt wird aber dem elektronischen Bauelement die zum Betreiben desselben erforderliche Energie in Form elektromagnetischer Wellen von einem externen Sender zugeführt. Hierzu ist mit dem elektronischen Bauelement eine in dem Kugelgelenk angeordnete Vorrichtung zum Empfangen elektromagnetischer Wellen angeordnet, die ferner mit einem Speichermedium zum Speichern elektrischer Energie versehen sein kann. Bei dieser Art der Energiezufuhr ist eine nur geringe Leistungsaufnahme von dem elektronischen Bauelement besonders vorteilhaft.

Die Erfindung wird nachfolgend anhand bevorzugter Ausführungsformen unter Bezugnahme auf die zugehörige Zeichnung näher beschrieben. In der Zeichnung
zeigen:
- Figur 1: eine erste Ausführungsform eines erfindungsgemäßen Kugelgelenks,
- Figur 2: eine zweite Ausführungsform eines erfindungsgemäßen Kugelgelenks und
- Figur 3: eine dritte Ausführungsform eines erfindungsgemäßen Kugelgelenks.

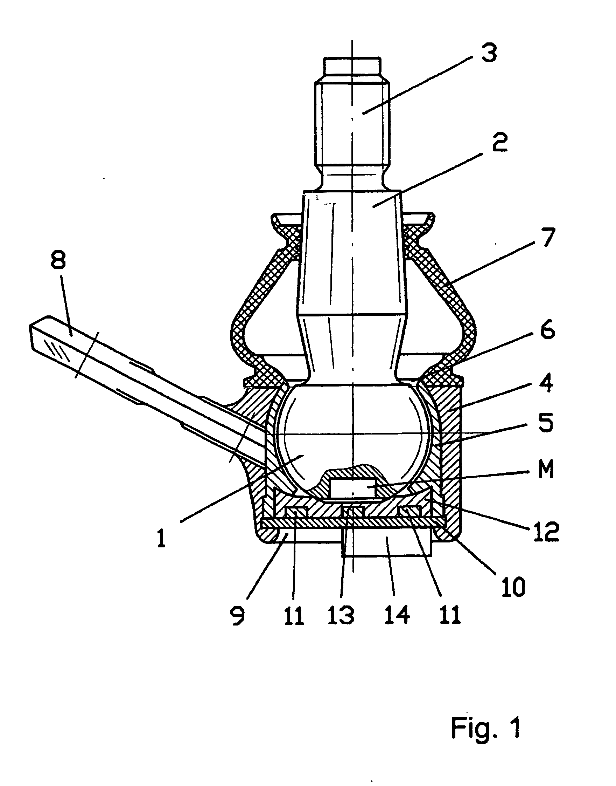

Aus der Figur 1 ist eine erste Ausführungsform des erfindungsgemäßen Kugelgelenks ersichtlich, wobei ein eine Gelenkkugel 1 und einen Zapfen 2 aufweisender Kugelzapfen 3 mit seiner Gelenkkugel 1 drehbar und schwenkbar in einem Kugelgelenkgehäuse 4 gelagert ist. Der Kugelzapfen 3 ist mit seiner Gelenkkugel 1 in einer in das Kugelgelenkgehäuse 4 eingesetzten und aus Kunststoff hergestellten Lagerschale 5 angeordnet und ragt mit seinem Zapfen 2 durch eine in dem Kugelgelenkgehäuse 4 vorgesehenen Gelenköffnung 6 aus dem Kugelgelenkgehäuse 4 heraus.

Gegen das Eindringen von Schmutz und Feuchtigkeit in das Innere des Kugelgelenks ist ein aus einem Elastomer gefertigter Dichtungsbalg 7 vorgesehen, der mit seinem einen Ende an dem Kugelgelenkgehäuse 4 befestigt und mit seinem anderen Ende an dem Zapfen 2 gleitfähig gelagert ist. Das Innere des Kugelgelenkgehäuses 4 und des Dichtungsbalgs 7 ist jeweils mit einem nicht dargestellten Schmiermittel gefüllt, welches das mechanische Verhalten des Kugelgelenks in positiver Hinsicht beeinflusst und ferner einen zusätzlichen Schutz gegen das Eindringen von Schmutz und Feuchtigkeit bildet.

Das Kugelgelenkgehäuse 4 ist einstückig mit einem Flansch 8 verbunden und weist an seinem der Gelenköffnung 6 abgewandten Ende eine Montageöffnung 9 auf, die durch ein als elektronische Leiterplatte ausgebildetes Verschlusselement 10 verschlossen ist. Zur Festlegung des Verschlusselementes 10 in dem Gehäuse 4 wird ein die Montageöffnung 9 des Gehäuses 4 umgebender Gehäuserand umgeformt. An der Innenseite des Verschlusselements 10 sind mehrere elektronische Bauelemente 11 angeordnet, die von einem aus Kunststoffhergestellten Schutzelement 12 vollständig abgedeckt sind. Eines der elektronischen Bauelemente ist als Magnetfeldsensor 13 ausgebildet, der mit einem in der Gelenkkugel 1 angeordneten Magneten M zusammenwirkt. Die elektronischen Bauelemente 11, 13 sind zumindest mittelbar mit einem an der Außenseite des Verschlusselements 10 angeordneten Stecker 14 elektrisch verbunden, über den im betriebsbereiten Zustand ein Anschluss der elektronischen Bauelemente 11, 13 an ein externes Gerät (nicht gezeigt) erfolgt. Ferner werden die elektronischen Bauelemente 11, 13 im Betrieb über den Stecker 14 mit Energie versorgt.

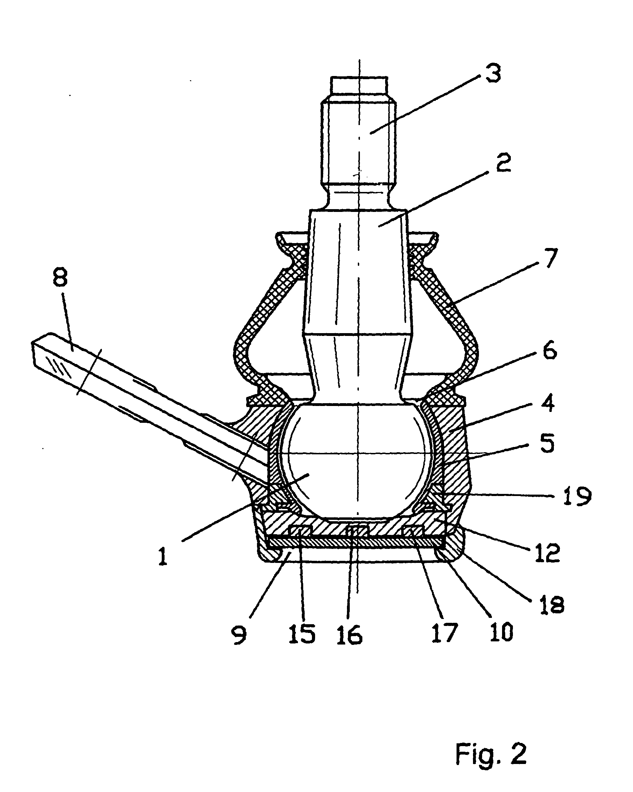

Aus Figur 2 ist eine zweite Ausführungsform des erfindungsgemäßen Kugelgelenks ersichtlich, wobei gleiche oder funktionsgleiche Merkmale mit denselben Bezugzeichen wie bei der ersten Ausführungsform gekennzeichnet sind.

Die zweite Ausführungsform weist im Gegensatz zur ersten Ausführungsform keinen Stecker an der Außenseite des Verschlusselements 10 auf Um dennoch eine Kommunikation mit einem externen Gerät (nicht gezeigt) zu ermöglichen, ist an der Innenseite des Verschlusselements 10 ein mit dem hier als anwendungsspezifischer Schaltkreis (ASIC) 15 ausgebildeten elektronischen Bauelement zumindest mittelbar elektrisch verbundenes Sendeelement 16 zum Aussenden von Information tragenden elektromagnetischen Wellen vorgesehen, die von dem externen Gerät empfangen und ausgewertet werden können. Das externe Gerät ist hierzu mit einem geeigneten Empfänger und einer Auswerteeinrichtung versehen.

Ferner ist eines der elektronischen Bauelemente als Empfangselement 17 zum Empfangen von Information tragenden elektromagnetischen Wellen ausgebildet, so dass nach der zweiten Ausführungsform ein beidseitiger kabelloser Austausch von Informationen zwischen dem Kugelgelenk und dem externen Gerät erfolgt, welches hierzu mit einem geeigneten Sender versehen ist.

Abweichend zur ersten Ausführungsform ist zum Festlegen des Verschlusselements 10 nicht der die Montageöffnung 9 umgebende Gehäuserand sondern ein separater Befestigungskranz 18 vorgesehen, der an dem Gehäuse 4 befestigt und zum Festlegen des Verschlusselements 10 nach Innen umgebördelt ist. Ferner ist zum zusätzlichen Abstützen der Lagerschale 5 ein Einsatzring 19 zwischen der Lagerschale 5 und dem Schutzelement 12 vorgesehen.

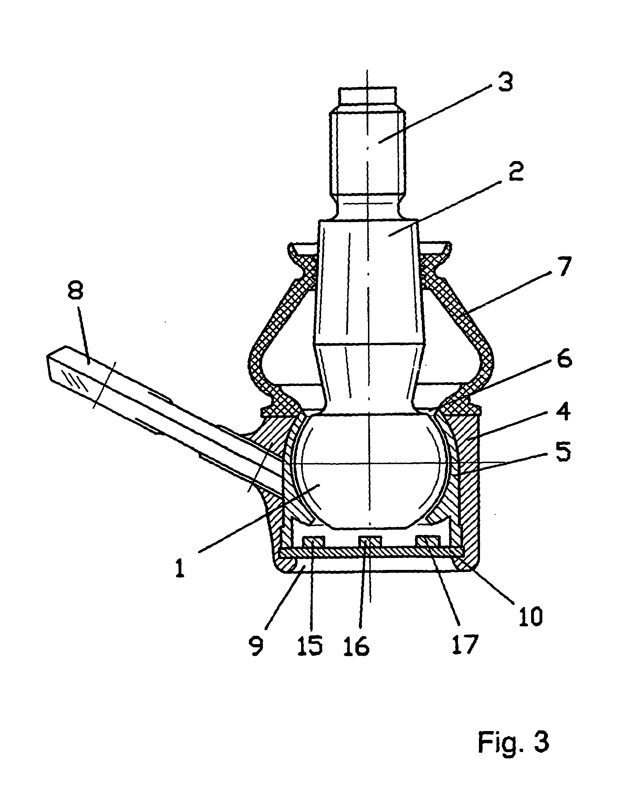

Aus Figur 3 ist eine dritte Ausführungsform des erfindungsgemäßen Kugelgelenks ersichtlich, wobei gleiche oder funktionsgleiche Merkmale mit denselben Bezugzeichen wie bei den vorherigen Ausführungsformen gekennzeichnet sind. Die Festlegung des Verschlusselements 10 am Kugelgelenkgehäuse 4 ist analog zur ersten Ausführungsform realisiert.

Die dritte Ausführungsform weist im Gegensatz zu den beiden anderen Ausführungsformen kein Schutzelement auf, so dass bei gleichen Abmessungen ein größerer (eventuell mit einem Schmierstoff gefüllter) Freiraum zwischen dem Verschlusselement 10 und der Gelenkkugel 1 zur Verfügung steht. Somit ist eine kompakte Bauweise bei gleichzeitig großem Schwenkbereich für den Kugelzapfen 3 möglich.

### Bezugszeichenliste:

- 1: Gelenkkugel
- 2: Zapfen
- 3: Kugelzapfen
- 4: Kugelgelenkgehäuse
- 5: Lagerschale
- 6: Gelenköffnung
- 7: Dichtungsbalg.
- 8: Flansch
- 9: Montageöffnung
- 10: Verschlusselement
- 11: elektronisches Bauelement
- 12: Schutzelement
- 13: Sensor
- 14: Stecker
- 15: ASIC
- 16: Sendeeinheit
- 17: Empfangseinheit
- 18: Befestigungskranz
- 19: Einsatzring
- M: Magnet

## Patentansprüche

1. Kugelgelenk für ein Kraftfahrzeug, insbesondere für das Fahrwerk des Kraftfahrzeugs, mit einem mit einer Gelenköffnung (6) versehenen Kugelgelenkgehäuse (4), einem eine Gelenkkugel (1) und einen Zapfen (2) aufweisenden Kugelzapfen (3), welcher mit seiner Gelenkkugel (1) drehbar und schwenkbar in dem Kugelgelenkgehäuse (4) gelagert ist und mit seinem Zapfen (2) durch die Gelenköffnung (6) hindurch aus dem Kugelgelenkgehäuse (4) herausragt, an welchem ein eine in diesem vorgesehene Montageöffnung (9) zumindest teilweise verschließendes, separates Verschlusselement (10) befestigt ist,
**dadurch gekennzeichnet, dass**
wenigstens ein elektronisches Bauelement (11) an dem Verschlusselement (10) angeordnet ist.

2. Kugelgelenk nach Anspruch 1, **dadurch gekennzeichnet, dass** die Montagöffnung (9) an der der Gelenköffnung (6) gegenüberliegenden Seite des Kugelgelenkgehäuses (4) vorgesehen und von dem Verschlusselement (10) verschlossen ist.

3. Kugelgelenk nach Anspruch 1 oder 2, **dadurch gekennzeichnet, dass** das elektronische Bauelement (11) an der der Gelenkkugel zugewandten Seite des Verschlusselementes (10) angeordnet ist.

4. Kugelgelenk nach einem der vorangehenden Ansprüche, **dadurch gekennzeichnet, dass** an dem Verschlusselement (10) ein Schutzelement (12) vorgesehen ist, von welchem das elektronische Bauelement (11) abgedeckt ist.

5. Kugelgelenk nach Anspruch 4, **dadurch gekennzeichnet, dass** das Schutzelement (12) aus einem elektrisch isolierenden Werkstoff, insbesondere aus Kunststoff hergestellt und unmittelbar auf das elektronische Bauelement (11) aufgespritzt ist.

6. Kugelgelenk nach einem der vorangehenden Ansprüche, **dadurch gekennzeichnet, dass** das Verschlusselement (10) selbst als elektronische Leiterplatte ausgebildet ist, auf welcher das elektronische Bauelement (11) montiert ist.

7. Kugelgelenk nach Anspruch 6, **dadurch gekennzeichnet, dass** das Verschlusselement (10) aus glasfaserverstärktem Kunststoff hergestellt ist.

8. Kugelgelenk nach einem der vorangehenden Ansprüche, **dadurch gekennzeichnet, dass** das elektronische Bauelement (11) mit einem in oder an dem Kugelgelenkgehäuse (4) angeordneten Sensor (13) zum Erfassen einer den Zustand des Kugelgelenks charakterisierenden physikalischen Größe elektrisch verbunden ist.

9. Kugelgelenk nach Anspruch 8, **dadurch gekennzeichnet, dass** der Sensor (13) mit dem elektronischen Bauelement (11) integriert ausgebildet ist.

10. Kugelgelenk nach einem der vorangehenden Ansprüche, **dadurch gekennzeichnet, dass** das elektronische Bauelement ein anwendungsspezifischer integrierter Schaltkreis (15) ist.

11. Kugelgelenk nach einem der vorangehenden Ansprüche, **dadurch gekennzeichnet, dass** an der der Gelenkkugel (1) abgewandten Seite des Verschlusselements (10) ein mit dem elektronischen Bauelement (11) elektrisch verbundener Stecker (14) angeordnet ist.

12. Kugelgelenk nach einem der vorangehenden Ansprüche, **dadurch gekennzeichnet, dass** in dem Kugelgelenk eine mit dem elektronischen Bauelement (11) elektrisch gekoppelte Vorrichtung (16) zum Senden elektromagnetischer Wellen angeordnet ist.

13. Kugelgelenk nach einem der vorangehenden Ansprüche, **dadurch gekennzeichnet, dass** in dem Kugelgelenk eine mit dem elektronischen Bauelement (11) elektrisch gekoppelte Vorrichtung (17) zum Empfangen elektromagnetischer Wellen angeordnet ist.

14. Kugelgelenk nach einem der vorangehenden Ansprüche, **dadurch gekennzeichnet, dass** das Gehäuse (4) eine elektromagnetische Abschirmung oder einen Kühlkörper für das elektronische Bauelement (11) bildet.

## Claims

1. Ball-and-socket joint for a motor vehicle, in particular for the chassis of the motor vehicle, with a ball-and-socket joint housing (4), which is provided with a joint opening (6), a ball pin (3) which comprises a joint ball (1) and a pin (2), is mounted with its joint ball (1) so as to be rotatable and pivotable in the ball-and-socket joint housing (4) and projects with its pin (2) through the joint opening (6) out of the ball-and-socket joint housing (4), to which a separate closure element (10) is fastened, the latter at least partly closing a mounting opening (9) provided in the housing,
**characterised in that**
at least one electronic component (11) is disposed at the closure element (10).

2. Ball-and-socket joint according to Claim 1, **characterised in that** the mounting opening (9) is provided on the side of the ball-and-socket joint housing (4) lying opposite the joint opening (6) and is closed by the closure element (10).

3. Ball-and-socket joint according to Claim 1 or 2, **characterised in that** the electronic component (11) is disposed on the side of the closure element (10) which faces the joint ball.

4. Ball-and-socket joint according to any one of the preceding Claims, **characterised in that** a protective element (12) which covers the electronic component (11) is provided at the closure element (10).

5. Ball-and-socket joint according to Claim 4, **characterised in that** the protective element (12) is made of an electrically insulating material, in particular of a plastics material, and is directly moulded onto the electronic component (11).

6. Ball-and-socket joint according to any one of the preceding Claims, **characterised in that** the closure element (10) is itself formed as an electronic printed circuit board on which the electronic component (11) is mounted.

7. Ball-and-socket joint according to Claim 6, **characterised in that** the closure element (10) is made of a glass-fibre reinforced plastics material.

8. Ball-and-socket joint according to any one of the preceding Claims, **characterised in that** the electronic component (11) is electrically connected to a sensor (13), disposed in or at the ball-and-socket joint housing (4), for detecting a physical quantity which characterises the state of the ball-and-socket joint.

9. Ball-and-socket joint according to Claim 8, **characterised in that** the sensor (13) is formed so as to be integrated with the electronic component (11).

10. Ball-and-socket joint according to any one of the preceding Claims, **characterised in that** the electronic component is an application specific integrated circuit (15).

11. Ball-and-socket joint according to any one of the preceding Claims, **characterised in that** a plug connector (14), which is electrically connected to the electronic component (11), is disposed on the side of the closure element (10) which is remote from the joint ball (1).

12. Ball-and-socket joint according to any one of the preceding Claims, **characterised in that** a device (16), which is electrically coupled to the electronic component (11), for transmitting electromagnetic waves is disposed in the ball-and-socket joint.

13. Ball-and-socket joint according to any one of the preceding Claims, **characterised in that** a device (17), which is electrically coupled to the electronic component (11), for receiving electromagnetic waves is disposed in the ball-and-socket joint.

14. Ball-and-socket joint according to any one of the preceding Claims, **characterised in that** the housing (4) constitutes an electromagnetic screen or a cooling body for the electronic component (11).

## Revendications

1. Joint à rotule pour un véhicule automobile, en particulier pour le train de roulement du véhicule automobile, avec un boîtier de joint à rotule (4) muni d'une ouverture d'articulation (6), un tourillon porte- rotule (3), présentant une rotule d'articulation (1) et un tourillon (2), monté à rotation et à pivotement, par sa rotule d'articulation (1), dans le boîtier de joint à rotule (4) et sortant, par son tourillon (1), à travers l'ouverture d'articulation (6) hors du boîtier de joint à rotule (4), sur lequel est fixé un élément de fermeture (10) séparé, fermant au moins partiellement une ouverture de montage (9) prévue dans ce boîtier,
**caractérisé en ce qu'**au moins un composant (11) électronique est disposé sur l'élément de fermeture (10).

2. Joint à rotule selon la revendication 1, **caractérisé en ce que** l'ouverture de montage (9) est prévue sur le côté, opposé à l'ouverture d'articulation (6), du boîtier de joint à rotule (4) et est fermée par l'élément de fermeture (10).

3. Joint à rotule selon la revendication 1 ou 2, **caractérisé en ce que** le composant électronique (11) est distribué sur le côté, tourné vers la rotule d'articulation, de l'élément de fermeture (10).

4. Joint à rotule selon l'une des revendications précédentes, **caractérisé en ce qu'**un élément de protection (12), par lequel le composant électronique (11) est couvert, est prévu sur l'élément de fermeture (10).

5. Joint à rotule selon la revendication 4, **caractérisé en ce que** l'élément de protection (12) est fabriqué en un matériau isolant de l'électricité, en particulier en matière synthétique, et est enrobé par injection directement sur le composant électronique (11).

6. Joint à rotule selon l'une des revendications précédentes, **caractérisé en ce que** l'élément de fermeture (10) lui-même est réalisé sous la forme de plaquette à circuit imprimé électronique, sur laquelle est monté un composant électronique (11).

7. Joint à rotule selon la revendication 6, **caractérisé en ce que** l'élément de fermeture (10) est fabriqué en matière synthétique renforcée par des fibres de verre.

8. Joint à rotule selon l'une des revendications précédentes, **caractérisé en ce que** le composant électronique (11) est relié électriquement à un capteur (13), disposé dans ou sur le boîtier de joint en rotule (4), afin de détecter une grandeur physique caractérisant l'état du joint à rotule.

9. Joint à rotule selon la revendication 8, **caractérisé en ce que** le capteur (13) est intégré au composant électronique (11).

10. Joint à rotule selon l'une des revendications précédentes, **caractérisé en ce que** le composant électronique est un circuit de commutation (15) intégré, spécifique à une application.

11. Joint à rotule selon l'une des revendications précédentes, **caractérisé en ce que** sur le côté, opposé au joint à rotule (1), de l'élément de fermeture (10) est disposée une prise (14) reliée électriquement au composant électronique (11).

12. Joint à rotule selon l'une des revendications précédentes, **caractérisé en ce que**, dans l'articulation à rotule, est disposé un dispositif (16) d'émission d'ondes électromagnétiques, couplé électriquement au composant électronique (11).

13. Joint à rotule selon l'une des revendications précédentes, **caractérisé en ce que**, dans le joint à rotule, est disposé un dispositif (17) de réception d'ondes électromagnétiques, couplé électriquement au composant électronique (11).

14. Joint à rotule selon l'une des revendications précédentes, **caractérisé en ce que** le boîtier (4) forme un écrantage électromagnétique, ou bien un corps de refroidissement pour le composant électronique (11).
